# EUROPEAN PATENT APPLICATION

(11) **EP 1 111 888 A2**
(43) Date of publication of application: **27.06.2001**
(21) Application number: 00309847.2
(22) Date of filing: 06.11.2000
(51) Int. Cl.: H04M 3/42, H04M 11/04, H04M 7/00

(54) **Enhanced system and method for use in a telephone network to expedite delivery of emergency calls to a public safety answering point**

(30) Priority: 22.12.1999 US 469398
(71) Applicant: LUCENT TECHNOLOGIES INC., Murray Hill, New Jersey 07974-0636 (US)
(72) Inventor: Gerber, Eugene, Hudson, Florida 34667 (US); Goodmon, Gregory Glynn, Schaumburg, Illinois 60173 (US); Ziemann, Donald Robert, Montgomery, Illinois 60538 (US)
(74) Representative: Buckley, Christopher Simon Thirsk

(57) **Abstract**

A system and method that expedites delivery of a 911 call from a serving local switch (16,18,20) for the calling party to the PSAP (26,28), wherein each local switch is connected via network (74) (or direct connection) to a database (60) (an adjunct system such as an emergency service adjunct) that informs the local switch of a primary path and one or more secondary paths for delivery of the call. If the switch determines that multiple calls from approximately the same location are being made, the switch may deliver these calls to an alternative PSAP as probably being redundant and given a lower priority.

## Description

### Field Of The Invention

This invention relates to the field of emergency (911) telephone calls, and, more specifically, to the area of expediting call handling within the telephone network to insure swift emergency call connection.

### Background of the Invention

Since the advent of emergency calling (herein also "911 calling") in the mid-1960's, telephone companies have worked to insure that such emergency services are quick and easy to use. Over the course of the years, 911 calling has been enhanced (E911) so that the emergency operator has all of the information regarding the name and address of the calling party. Further, some work is also been done at the Public Safety Answering Point (PSAP) to make them more economical and have more features, see e.g., Brozovich et al. U.S. Patent No. 5,311,569, a line-based 911 system that can deliver the calling party number of the telephone, not just the automatic number identification as delivered in most systems.

There are, however, some areas that have not been explored for improvement. Primarily, a 911 call is routed through the network as an ordinary telephone call; there is no heightened priority available or given to the call. Further, the call is routed to a "911 tandem" or 911 selective router office which then determines the PSAP that serves the area that the calling party is in. During periods of an emergency i.e., a building fire or a catastrophe, there is typically a flood of 911 calls from the affected area. These 911 calls cause congestion in the network and at the PSAP, but report the same incident. There is no manner in which a 911 operator can determine whether a call is redundant, and fiuther, once the call is in the network there is no way to bypass a congested switch.

Therefore, there is a need in the art for a system and method that gives priority handling to 911 calls.

### Summary of the Invention

This problem is solved and a technical advance is achieved in the art by a system and method that expedites delivery of a 911 call from a calling party serving local switch to the PSAP. Each local switch in a service region is connected via a network (or direct connection) to a database (an adjunct system such as an emergency service adjunct) that informs the local switch of a primary path and one or more secondary paths for delivery of the call. If the switch determines that multiple calls from approximately the same location are being made, the switch may deliver these calls to an alternative PSAP as probably being redundant and given a lower priority.

### Brief Description of the Drawings

A more complete understanding of the invention may be obtained from the following description taken in conjunction with the drawings in which:
FIG. 1 is a block diagram of a telephone network employing an exemplary embodiment of this invention; and
FIG. 2 is a call flow diagram of a 911 call in the context of the telephone network of FIG. 1; and
FIG 3 is a block diagram of the telephone network of FIG 1 illustrating a further exemplary embodiment of this invention.

### Detailed Description

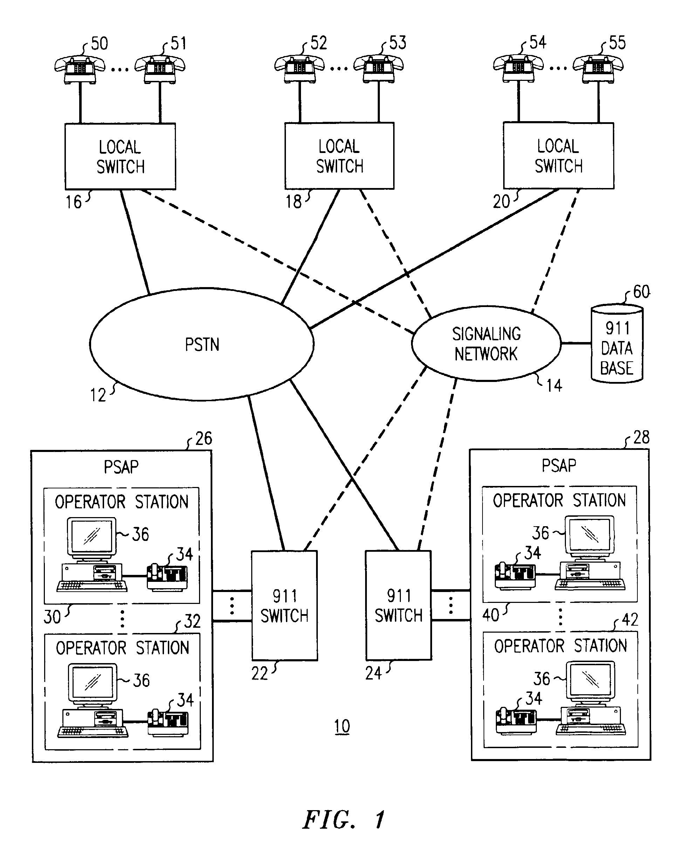

FIG. 1 is a block diagram of a telephone network 10 implementing an exemplary embodiment of this invention. Telephone network 10 comprises a public-switched telephone network (PSTN) 12, as is known in the art, and a signaling network 14, as is also known in the art. Among the many switches, trunks, etc. in PSTN 12 are local switches represented by local switches 16, 18 and 20. Local switches 16, 18 and 20 provide primary telephone service to residences and businesses.

Also part of telephone network 10 are 911 switches represented by 911 switch 22 and 911 switch 24, which support public safety answering points (PSAP), represented by PSAP's 26 and 28. PSAP 26 comprises a plurality of operator stations represented operator stations 30 and 32. There may be many more operator stations or as few as one operator station in each PSAP. Each operator station comprises a telephone 34 and personal computer (PC) or other display screen 36. Likewise, PSAP 28 comprises a plurality of operator stations represented by operator stations 40 and 42, both of which include telephone set 34 and a PC 36.

Each local switch supports a plurality of subscriber telephone station sets represented by telephones 50, 51 (supported by local switch 16), 52, and 53 (supported by local switch 18), and telephones 555 and 56 (supported by local switch 20). Each telephone 50-55 is assigned to be served by a PSAP 26 or PSAP 28, depending upon the geographic location of the subscriber and the political jurisdiction served by the PSAPs. Further, a local switch may support subscribers in more than one jurisdiction. For example, telephones 50 and 51 may be in different towns and, thus, supported by different police departments. However, telephones 50 and 51 may be supported by the same fire protection district. Therefore, in the current art there is a 911 tandem switch in the PSTN 12, wherein all 911 calls are routed to the tandem switch along with the calling line identification (CLID) or automatic number identification (ANI). The 911 tandem switch determines which of the plurality of 911 switches to route the call to.

As stated above, in the problem being solved by this invention, there may be network congestion anywhere within the PSTN 12. There may be congestion between the local switch and the 911 tandem, between the 911 tandem and the 911 switch, or any switching system or access system that is in between. In fact, a large disaster usually generates a plurality of 911 calls with many people reporting the same incident, which can cause network congestion in an of itself.

Each local switch 16, 18, and 20 is connected to a signaling network 14. In the current art, many local switches are already so connected to a signaling network using, for example, CCS 7 signaling. According to this invention, a 911 database 60 is connected as an intelligent peripheral to the signaling network. According to this invention then, if the subscriber of telephone 50 dials "911", local switch 16 sends a signaling message through signaling network 14 to 911 database 60. The signaling message includes the CLI or ANI of telephone 50, depending on what number is available. 911 database 60 would perform a lookup to determine which of the PSAPs connected to the PSTN serves the location of telephone 50. 911 database 60 may contain, for example, a primary and a secondary routing through PSTN 12 to PSAP 26, so that local switch 16 may avoid congestion if such becomes a problem in the network. 911 database 60 sends a message back that includes this routing information through signaling network 14 to local switch 16. Local switch 16 then sends the call through PSTN advantageously using the most direct routing method to 911 switch 22. 911 switch 22 selects an available operator station such as 30 or 32, or selects an operator station that is assigned to the specific jurisdiction.

Furthermore, 911 database 60 may also maintain other records, such as languages other than English being spoken in the household, hazardous chemicals, dogs, etc., that may pose a problem or a special needs issue that would be helpful to the officers responding to the emergency call. To this end, 911 database 60 sends through signaling network 14 a message containing a block of data including special handling information. 911 switch 22 associates the data with the incoming call by means of the ANI or CLI and delivers the data concurrently to the operator station that is selected for this particular call.

This delivery of supplemental information is also helpful when, for example, the user of telephone 50 hangs up or the line goes dead due to the emergency prior to the call being connected to a PSAP. The operator station has a page of information that indicates there was an emergency call placed from a phone and has the option of calling back to the party that called to determine if the emergency is still present and/or to test the line.

This architecture also has additional advantages. For example, if there is power outage at PSAP 26, the records at 911 database may be temporarily changed in order to route all emergency calls to PSAP 28 without first routing to 911 switch 22. In this manner, the most expeditious path is selected automatically.

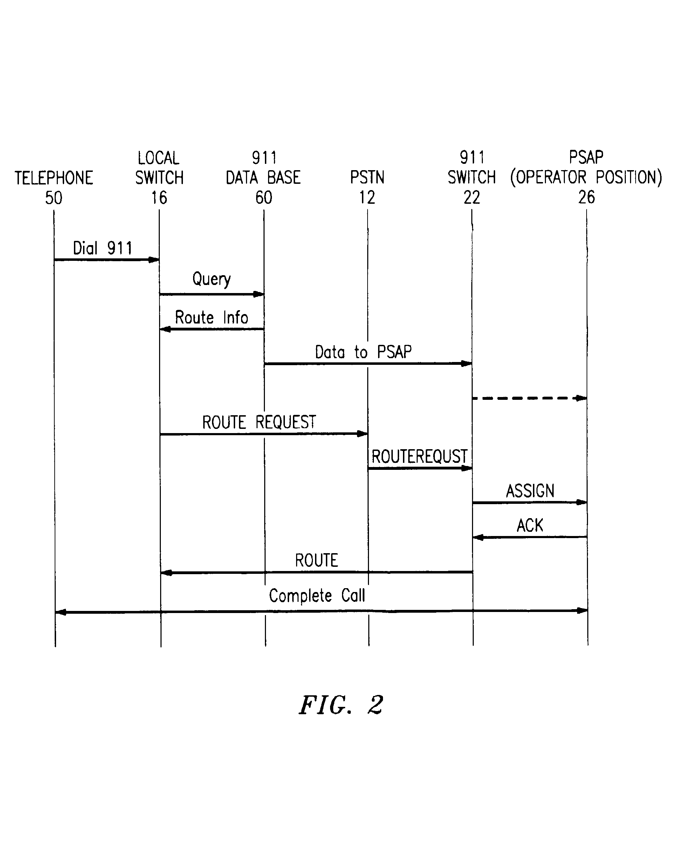

Turning now to FIG. 2, a call flow scenario according to the exemplary embodiment of the invention is described in FIG. 1 is shown. The caller at telephone 50 dials "911", which is received at local switch 16. Local switch 16 sends a query to 911 database 60 via signaling network 14. 911 database 60 performs its lookup and returns routing information to local switch 16. Additionally, 911 database may send information to the appropriate 911 switch 22 which may then optionally be sent to the operator position in PSAP 26.

Next, local switch 16 sends a route request message through PSTN 12 which forwards the route request message to 911 switch 22. 911 switch 22 sends an assignment message to PSAP 26 which then sends an acknowledgement back to 911 switch 22. If a route can be completed, then the route message is sent from 911 switch 22 back to local switch 16. The call is then complete between telephone 50 and the PSAP operator position 26.

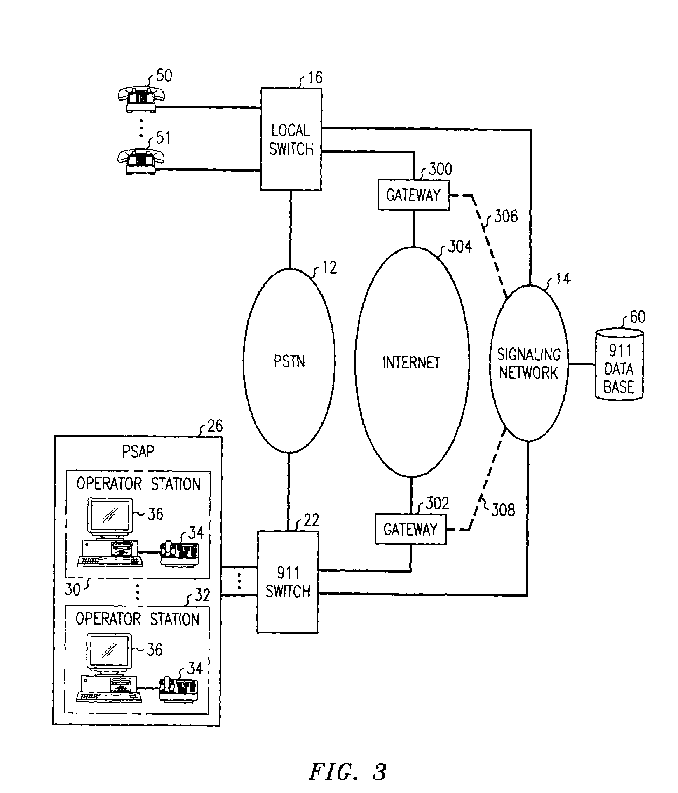

Turning now to FIG. 3, a simplified block diagram of the telephone network of FIG. 1 is shown, illustrating a further exemplary embodiment of this invention. As in FIG. 1, PSTN 12 and signaling network 14 provide communication among local switches represented by local switch 16 and 911 switches represented by 911 switch 22. 911 switch 22 supports PSAP 26 which includes a plurality of operator stations represented by 30 and 32. Local switch 16 supports telephones 50 and 51. This exemplary embodiment provides a complete alternative pathway from local switch 16 to 911 switch 22 that can provide emergency telephony service even when PSTN 12 cannot process a call. In this exemplary embodiment, local switch 16 is connected to gateway 30. Gateway 300, as is known in the art, receives voice signals from local switch 16 and translates the analog voice signals into digital packetized data. In this exemplary embodiment, gateway 300 packetizes data into IP internet protocol (IP) packets and uses the voice over IP (VoIP) that is known in the art. VoIP provides bi-directional service through a packet network instead of the PSTN 12. Therefore, 911 switch 22 is also connected to a gateway 302 which provides video IP service. In this manner, if a call cannot be completed through PSTN 12 (either because of equipment problems or because of congestion) a VoIP call may be completed from local switch 50 through gateway 300, the internet 304 gateway 302 to 911 switch 22. The call can then completed through to PSAP 26 in the normal manner. 911 database 60 may provide whatever information is necessary to populate the data (ANI, CLI, etc.) as is known in the art.

Furthermore, gateways 300 and 302 may be connected to signaling network 14 by lines or trunks 306 and 308, respectively. Gateways 300 and 302 may packetize voice in a manner that the signaling network can use and process to communicate between gateways. In this manner, the signaling network may be used as an alternative method for delivering emergency calls.

It is to be understood that the above-described embodiments are merely illustrative principles of the invention, and that many variations may be devised by those skilled in the art without departing from the scope of this invention. It is, therefore, intended that such variations be included within the scope of the following claims.

## Claims

1. A method for use in a telephone system comprising the steps of:
receiving an emergency call, including the telephone number of the telephone on which the emergency call is originating;
determining a destination public safety answering point (PSAP) and a route for the call through the telephone network to the PSAP and information associated with the calling telephone;
sending the information associated with the calling telephone to the destination PSAP; and
delivering the 911 call and the information associated with the calling telephone to the destination PSAP.

2. A method in accordance with claim 1 wherein the step of determining a route for the call comprises determining a plurality of routes through the PSTN from the calling telephone to a destination 911 switch associated with the destination PSAP.

3. A method in accordance with claim 2 further including the step of determining whether the call can be delivered on a first of said plurality of routes, and routing the call on the first of said plurality of routes if the call can be delivered on the first of said plurality of routes.

4. A method in accordance with claim 2 further including the step of determining whether the call can be delivered on a first of said plurality of routes, and routing the call on another of said plurality of routes if the call cannot be delivered on the first of said plurality of routes.

5. A method in accordance with claim 1 further including the step of determining whether the call can be delivered to said PSAP and delivering the call to another PSAP if the call cannot be delivered to the first PSAP.

6. A method in accordance with claim 1 wherein the step of determining comprises sending a message through said signaling network to a 911 database, said message including the telephone number of the calling telephone, and said 911 database determining the PSAP and the route associated with the telephone number of the calling telephone, and sending the information associated with the telephone number of the calling telephone to the PSAP.

7. A method for use in a network element for providing information for routing emergency calls through a telephone network from an originating switch to a 911 switch, said method comprising the steps of:
obtaining information related to congestion in the telephone network;
receiving a request for routing an emergency call from the originating switch;
determining information including the identity of the 911 switch to service the call and a route for routing the emergency call through the telephone network from the originating switch to the determined 911 switch; and
sending the information to the originating switch.

8. A method in accordance with claim 7 wherein the step of determining information includes determining one or more alternative routes for routing the emergency call through the telephone network from the originating switch to the determined 911 switch.

9. A method in accordance with claim 7 wherein the step of receiving a request further includes receiving a calling line identification of the calling telephone, said method further comprising the step of said network element sending the calling line identification of the calling telephone to the 911 switch.

10. A method in accordance with claim 9 wherein the originating switch, the 911 switch and the network element are connected to a signaling network and wherein the step of obtaining information comprises obtaining information over said signaling network.

11. A method in accordance with claim 10 wherein the step of sending the information comprises sending the information over said signaling network.

12. A method in accordance with claim 10 wherein the step of said network element sending the calling line identification of the calling telephone to the 911 comprises sending the calling line identification of the calling telephone over said signaling network.

13. A method for use in a telephone system comprising a voice network and a data network, said method comprising the steps of:
receiving an emergency call, including the telephone number of the telephone on which the emergency call is originating;
determining a destination public safety answering point (PSAP) and a route for the call through the telephone network to the PSAP and information associated with the calling telephone; and
routing the 911 call and the information associated with the calling telephone to the destination PSAP over the data network.

14. A method in accordance with claim 13 further including the step of setting up a full duplex call between the PSAP and the calling telephone over the data network.

15. A method in accordance with claim 13 wherein the data network comprises the signaling network, and the step of routing comprises routing the 911 call and the information associated with the calling telephone to the destination PSAP over the signaling network.

16. A method in accordance with claim 13 wherein the data network comprises the Internet, and the step of routing comprises routing the 911 call and the information associated with the calling telephone to the destination PSAP over the Internet.

17. A method in accordance with claim 14 wherein the data network includes a first gateway at the originating switch for converting a voice call to a data call and a second gateway at the 911 switch for converting a voice call to a data call, said step of send setting up a full duplex call between the PSAP and the calling telephone over the data network including the substeps of converting between voice and data at said first gateway and converting between voice and data at said second gateway.
